(19) Europäisches Patentamt
European Patent Office
Office européen des brevets

(11) **EP 1 307 774 B1**

(12) **EUROPÄISCHE PATENTSCHRIFT**

(45) Veröffentlichungstag und Bekanntmachung des Hinweises auf die Patenterteilung:
**30.01.2008 Patentblatt 2008/05**

(21) Anmeldenummer: **01974114.9**

(22) Anmeldetag: **04.08.2001**

(51) Int Cl.:
**G02B 21/00** *(2006.01)*

(86) Internationale Anmeldenummer:
**PCT/EP2001/009049**

(87) Internationale Veröffentlichungsnummer:
**WO 2002/012945 (14.02.2002 Gazette 2002/07)**

(54) **ANORDNUNG ZUR ERHÖHUNG DER TIEFENDISKRIMINIERUNG OPTISCH ABBILDENDER SYSTEME**

ASSEMBLY FOR INCREASING THE DEPTH DISCRIMINATION OF AN OPTICAL IMAGING SYSTEM

DISPOSITION PERMETTANT D'AUGMENTER LA DISCRIMINATION EN PROFONDEUR DE SYSTEMES DE REPRESENTATION OPTIQUE

(84) Benannte Vertragsstaaten:
**AT BE CH CY DE DK ES FI FR GB GR IE IT LI LU MC NL PT SE TR**

(30) Priorität: **08.08.2000 DE 10038527**

(43) Veröffentlichungstag der Anmeldung:
**07.05.2003 Patentblatt 2003/19**

(60) Teilanmeldung:
**07024095.7**

(73) Patentinhaber: **Carl Zeiss MicroImaging GmbH**
**07745 Jena (DE)**

(72) Erfinder:
• **GERSTNER, Volker**
  **07743 Jena (DE)**
• **HECHT, Frank**
  **99425 Weimar (DE)**
• **LANGE, Ralph**
  **07743 JENA (DE)**
• **BLOOS, Helmut**
  **07747 Jena (DE)**

(74) Vertreter: **Scholze, Humbert**
**Carl Zeiss Jena GmbH**
**Servicebereich Recht und Patente**
**Carl-Zeiss-Promenade 10**
**07745 Jena (DE)**

(56) Entgegenhaltungen:
**WO-A-98/45745       US-A- 4 984 893**

• **PATENT ABSTRACTS OF JAPAN vol. 1995, no. 09, 31. Oktober 1995 (1995-10-31) & JP 07 159324 A (SHIMADZU CORP), 23. Juni 1995 (1995-06-23)**

**Beschreibung**

**Stand der Technik**

**Patente**

[1] Gröbler et alUS Patent 5,493,400, "Arrangement for projecting a test pattern onto a surface to be investigated" Prioritätsdatum 7. Juni 1993

[2] G. Schöppe et al.
DE Anmeldung "Optisches Projektionsgitter" Prioritätsdatum 26. Oct. 1993

[3] G. Schöppe
Verfahren und Vorrichtung zur Tiefenselektion von Mikroskopbildern
DE Aktenzeichen 199 30 816.0, 9. Juli 1999

[4] Ben Levy et alUS-Patent 5,867,604, "Imaging Measurement System", Continuation in Part of 08/510,632, Prioritätsdatum 3.Aug. 1995, US

[5] Ben Levy et al.PCT Anmeldung WO 97/06509, "Imaging Measurement System" Prioritätsdatum 3.Aug. 95

[6] WO 98/45745

**Veröffentlichungen**

[6] T. Wilson et al.Method of obtaining optical sectioning by using structured light in a conventional microscope, Optics Letters 22 (24) 1997.

[7] T. Wilson et al., Real-time three dimensional imaging of macroscopic structures, Journal of Microscopy 191 (2) 1998

[8] M.A.A. Neil et al Real Time 3D fluorescence microscopy by two beam interference illumination, Optics Communications 153, 1998

[9] F. Lanni et al., Grating image Systems for Optical Sectioning Fluorescence Microscopy of Cells, Tissues, and Small Organisms. Published in "Imaging Neurons-a laboratory manual, edited by R.Yuste,F.Lanni,A.Konnerth, Cold Spring Harbor Laboratory Press (2000).

[10]Optical Sectioning Fluorescence Spectroscopy in a Programmable Array Microscope Q.S. Hanley, P. J. Verveer, T. M. Jovin Applied Spectroscopy 52 (6) 783 (1998)

**Beschreibung der Abbildungen**

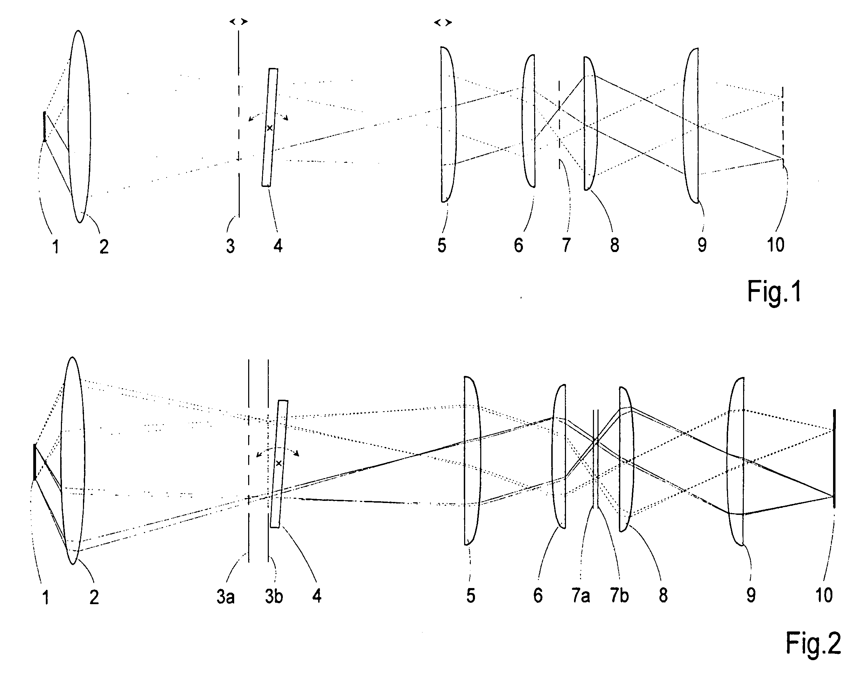

In Abbildung 1 ist das vereinfachte optische Schema der strukturierten Beleuchtung dargestellt. Eingezeichnet ist der bildgebende Strahlengang (Lukenstrahlengang). Ein 1 dimensionales Transmissionsgitter (3), welches sich in einer Schärfeebene der dargestellten optischen Anordnung befindet, wird durch eine Lichtquelle (1) und nachfolgender Kollektoroptik (2) beleuchtet. Das Transmissionsgitter kann in axialer Richtung (parallel zur optischen Achse des Systems) bewegt werden. Die Bewegungsmöglichkeit ist durch den eingezeichneten Pfeil dargestellt. Dem Gitter folgt in Lichtrichtung eine planparallele Glasplatte (4). Der Winkel der planparallen Platte zur optischen Achse kann definiert eingestellt werden. Durch die nachfolgende beleuchtungsseitigen „Linsen"[1] (5 + 6) (Tubuslinse und Objektiv bzw. Kondensor) wird die Struktur in die Präparatebene (7) abgebildet. Die durch einen Pfeil dargestellte Bewegungsmöglichkeit der Linse (5) (Tubuslinse) kann als alternative Lösung zur Bewegung des Gitters (3) verwendet werden, da eine axiale Verschiebung der Tubuslinse im Wesentlichen einer axialen Verschiebung der Schärfeebene gleichkommt.

[1] Unter Linsen sollen hier im allgemeinen auch komplexe Linsenssyteme verstanden werden.

Von dem Präparat ausgehendes Licht wird wiederum über ein Linsenpaar (8 + 9) (Objektiv und Tubuslinse) in die darauffolgende Schärfebene (10) abgebildet.

In Abbildung 2 ist der im allgemeinen auftretende Farblängsfehler der optischen Anordnung aus Abbildung 1 schematisch dargestellt. Eingezeichnet sind die Lukenstrahlengänge für zwei unterschiedliche Wellenlängen. Durch die chromatische Längsabberation der Linsenkombination liegen die Schärfeebenen für unterschiedliche Wellenlängen axial an unterschiedlichen Orten. Durch eine axiale Verschiebung des Gitters (bzw. der Tubuslinse (5) kann dieser chromatische Längsfehler korrigiert werden. Dies ist durch die Gitterpositionen (3a) und (3b) angedeutet. Außerdem wird für die beiden Wellenlängen axial nicht der gleiche Ort in der Probe scharf abgebildet. Dies ist durch die Schärfeebenen (7a) und (7b) dargestellt. Der Unterschied in der Lage der Schärfeebenen (7a) bzw. (7b)führt z.B: bei Mehrfachfluoreszenz zu einer fehlerhaften Erfassung des Objekts. Die chromatische Verschiebung der Schärfeebenen im Objekt kann über eine Software-Korrektur der axialen Positionen berücksichtigt werden.

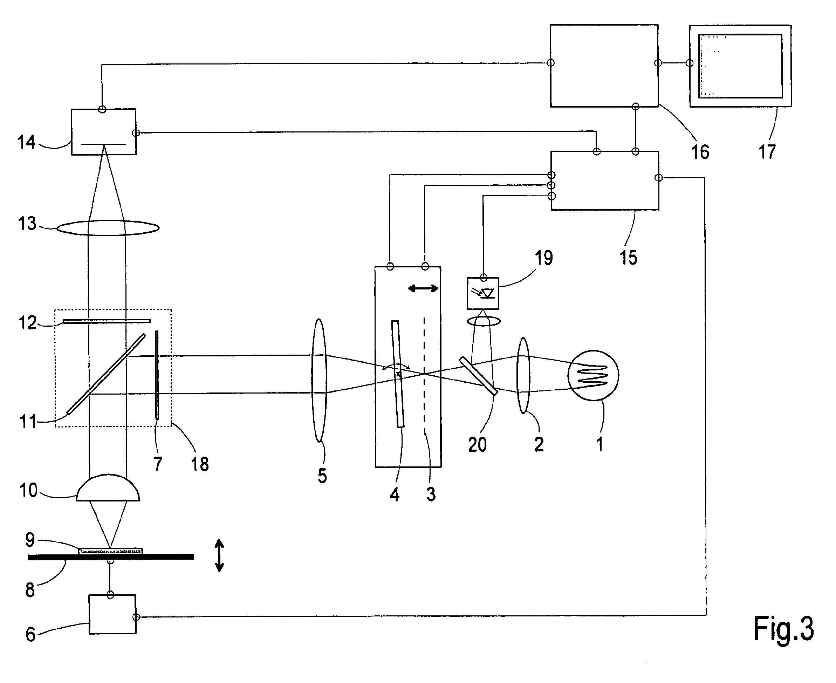

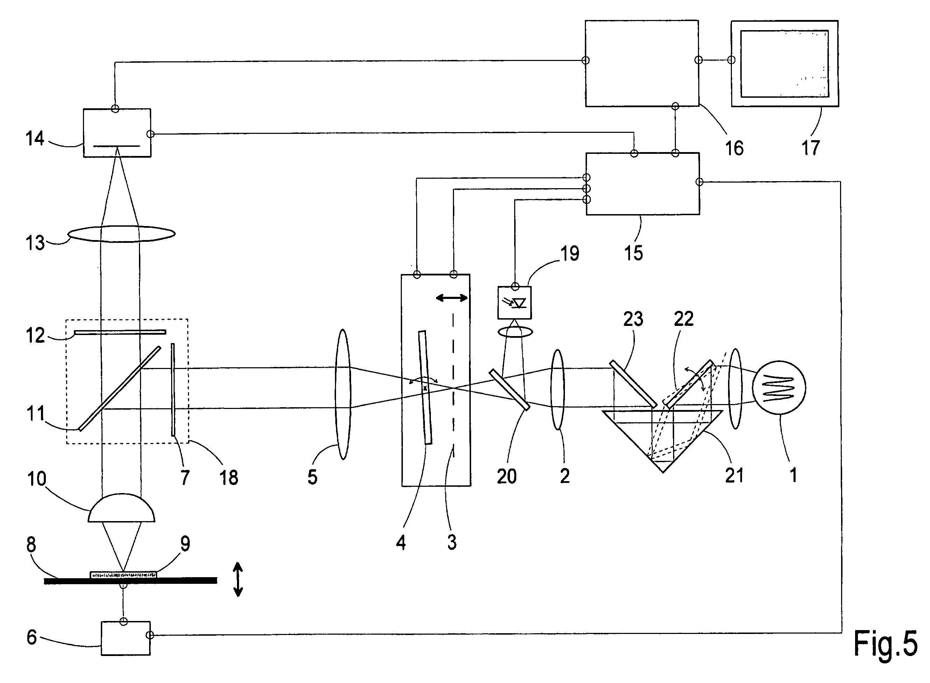

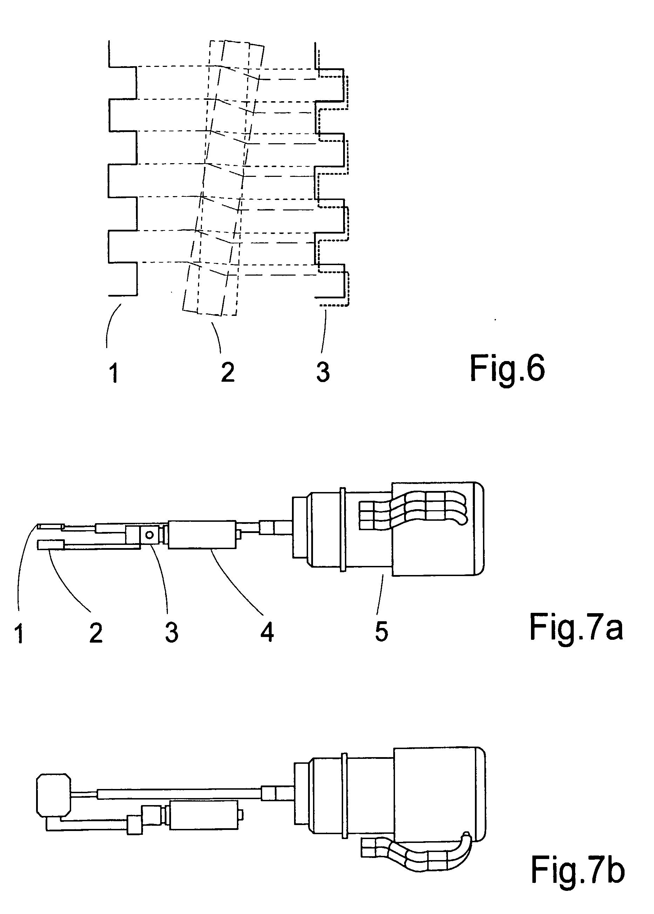

In Abbildung 3 ist eine Ausführung der optischen Anordnung aus Abbildung 1 bzw. Abbildung 2 zur Auflicht-Fluoreszenzdetektion in der Mikroskopie dargestellt. Mittels einer Lampe (1) und nachfolgender Linse (2) wird eine Struktur 3 (Sinusgitter oder binäres Transmissionsgitter) beleuchtet Die Position der Struktur kann z.B. über eine motorisch getriebene Excenter-Bewegung axial variiert werden (siehe Abbildung 7). Zur Ansteuerung ist der Motor des Excenters über ein Kabel mit der Steuerungselektronik verbunden. Eine darauffolgende planparallele, transparente Glasplatte (4) (Material z.B. BK7 oder Quarzglas) kann z.B. mittels Scanner (Abbildung 7) in verschiedene Winkelpositionen relativ zur optischen Achse versetzt werden. Zur Ansteuerung ist der Scanner über ein Kabel mit der Elektronikbox verbunden. Durch den Parallelversatz der Platte kann die Ortsphase der Struktur variiert werden (Abbildung 5). Die nachfolgende (beleuchtungsseitige) Tubuslinse (5) bildet die Struktur in den Unendlichraum der ICS-Optik des Mikoskops ab. Durch den Anregungsfilter (7), den dichroitischen Strahlteiler (11) und das Objektiv (10) wird die Struktur in die Präparatebene abgebildet. Das Präparat (9) befindet sich auf dem höhenverstellbaren Objekttisch (8). Die Höhe des Tisches (8) kann mit dem Trieb (6) in Pfeilrichtung eingestellt werden. Dazu ist der Trieb über ein Kabel mit der Elektroniksteuerung (15) verbunden. Das von der Probe emittierte Fluoresenzlicht wird über den dichroitischen Farbteiler und den nachfolgenden Emissionsfilter (12) von dem Anregungslicht separiert. Anregungsfilter, dichroitischer Strahlteiler und Emissionsfilter sind in der Gruppe (18) zusammengefaßt dargestellt. Die strukturierte Fluoreszenzemission wird schließlich über eine Tubuslinse (13) auf die Kamerzwischenbildebene fokussiert. Der CCD-Chip der Kamera (14) detektiert die derart strukturierte Fluoeszenzemission. Die Kameradaten werden zum PC (16) übertragen. Durch den PC können über die elektronische Schnittstelle zur Steuerelektronik die axiale Position der Struktur (Gitter) und der Winkel der planparallelen Platte relativ zur optischen Achse eingestellt werden. Dazu wird die Steuerungselektronik mit einem z.B. galvanischen Scanner (z.B. M2T, Fa. General Scanning 500 Arsenal Street, Watertown, MA 02472) verbunden. Letzlich kann damit die Ortsphase des Gitters gestellt werden (Abbildung 6). Desweiteren ist die axiale Position des Gitters einstellbar. Damit können chromatische Längsfehler minimiert werden (Abbildung 2). Dadurch wird die Orts-Phasenabhängie Detektion und Verrechnung der strukturierten Bilder zur Berechnung eines optischen Schnittbildes bei unterschiedlichen chromatischen Bedingungen möglich. Das Ergebnis der Berechnung wird auf dem Monitor 17 dargetellt.

Zur Messung der Beleuchtungsintensität wird über z.B. eine planparallele Platte (20) ein geringer Anteil des Anregungslichts ausgekoppelt und über eine Linse auf eine Photodiode (19) fokussiert. Die Spannung der Photodiode wird über eine Kabelverbindung zur Steuerelektronik geführt. Nach einer Analog-Digital-Wandlung wird der digitale Wert für die Korrektur von Instabilitäten der Lichtquelle verwendet.

Mögliche Realisierungen der axialen Verschiebung des Gitters und der Einstellung des Winkels der planparrallelen Platte sind Abbildung 7 zu entnehmen.

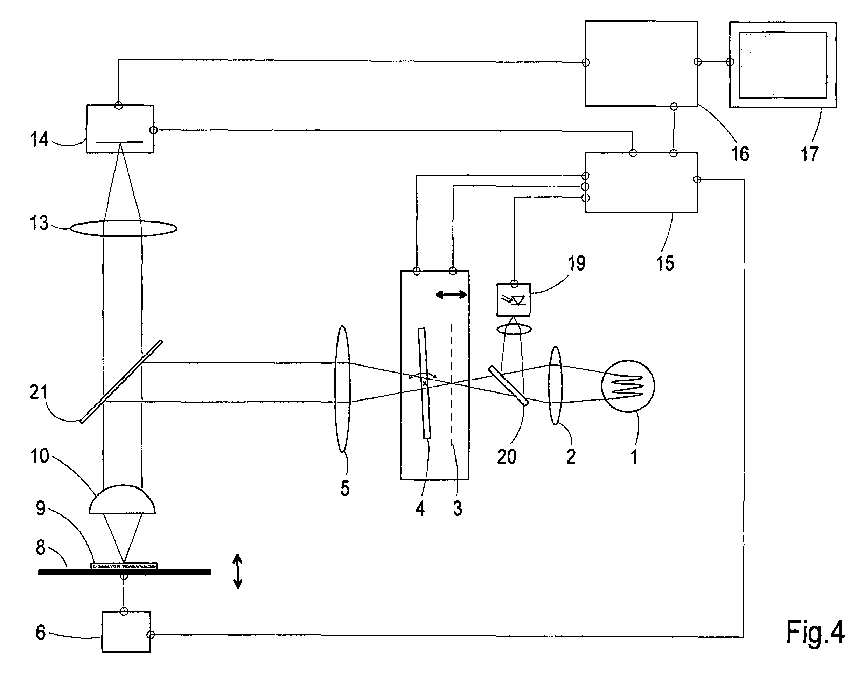

In Abbildung 4 ist eine entsprechende Anordnung für den Fall einer reflektierenden Probe dargestellt. Dazu wird die umrahmte Baugruppe (18) aus Abbildung 3 durch einen 50:50 Strahlteiler (21) (z.B. semitransparenter Spiegel) ersetzt.

In Abbildung 5 ist ein erweitertes System mit einem elektronischen Verschluß ("Shutter") zur Kontrolle der Belichtungszyklen für die Kameradetektion dargestellt. Der hier dargestellte Shutter besteht aus einem Planspiegel (22), dessen Winkel zur optischen Achse mittels z.B. galvanischem Scanner eingestellt werden kann, einem nachfolgenden Prisma (21) und einem feststehenden Spiegel (23). Durch die dargestellte Kombination von Planspiegel mit einstellbarem Winkel zur optischen Achse, Prisma und fixiertem Planspiegel kann eine "offene" (Strahlengang mit durchgezogenen Linien) und eine "geschlossene" Stellung der optischen Anordnung (Strahlengang gestrichelt) realisiert werden.

Die Anordnung ermöglicht ein schnelles "Ein- und Ausschalten" der Lichtquelle. Realistische Schaltzeiten liegen im Bereich von etwa 1-10ms. Die minimalen Verschlußzeiten werden durch die Reaktionszeiten des Scanners bei typischen Spiegeldurchmessern von etwa 20 mm limitiert.

Wesentlicher Vorteil ist hier die hohe Schaltzeit der Anordnung und der im Vergleiuch zu normalen Verschlüssen vernachlässigbare Verschleiß der dargestellten Anordnung.

In Abbildung 6 ist das Schema zur Einstellung der Ortsphase des Gitters dargestellt. Das hier dargestellte Rechteckgitter 1 wird über eine planparallele Glasplatte 2 abgebildet. Abhängig vom Winkel der Platte kann das Bild des Gitters 3 verschoben werden. Dadurch ist eine Einstellung der Phase des Gitters ohne mechanische Bewegung desselben möglich.

In Abbildung 7 a) ist eine seitliche Ansicht der Mimik zur Einstellung der axialen Position der Gitter. und der Einstellung des Winkels der planparallelen Platte dargestellt. Über einen motorisch (4) angesteuerten Excenter (3) kann die axiale Lage (Höhe) der Struktur (2) eingestellt werden. Ein galvanischer Scanner (5) erlaubt über eine Drehbewegung die Einstellung des Winkels der planparallelen Platte (1). In Abbildung 4 b) ist dieselbe Anordnung in Aufsicht dargestellt.

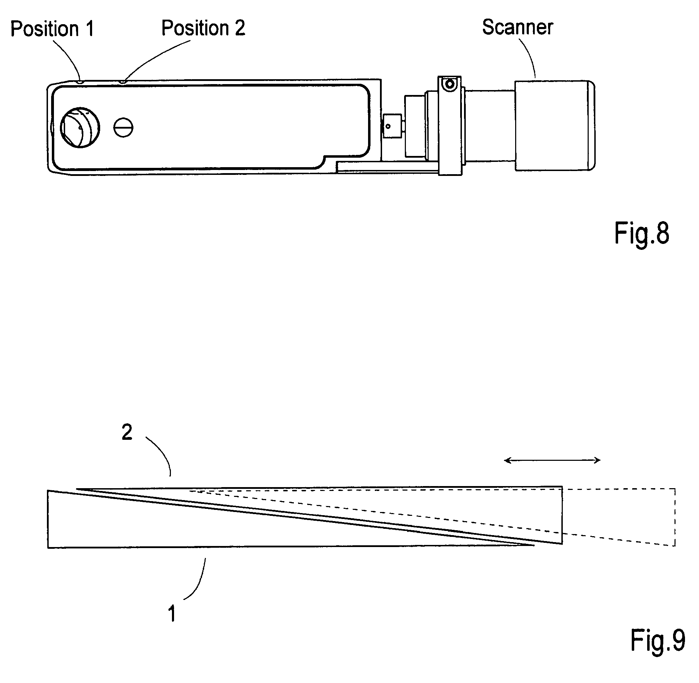

In Abbildung 8 ist schließlich eine Ausführung des gesamtem Moduls dargestellt, bei der zwei Blendenöffnungen vorgesehen sind. Die als Position 1 bezeichnete Öffnung ist ein strukturfreier optischer Durchgang mit einer variablen Irisblende (Feldblende des Mikroskops), Position 2 enthält die oben ausführlich dargestellte optische Anordnung bestehend aus Struktur und planparalleler Platte im optischen Strahlengang. Durch die hier dargestellte Anordnung ist ein einfacher Wechsel von z.B. gewöhnlicher Auflicht-Mikroskopie zur strukturierten Beleuchtung möglich. Dazu muß das gesamte dargestellte Modul senkrecht zur optischen Achse in die jeweils gewünschte Position bewegt werden.

In Abbildung 9 ist eine Möglichkeit zur Korrektur der chromatischen Längsabberation in der LFB-Ebene dargestellt. Dazu werden zwei optische Glaskeile (1 )(2) eingesetzt, wobei einer der beiden Keile z.B. durch einen Linearmotor in der durch den Pfeil angegebenen Richtung verschoben werden kann. Die dargestellte Anordnung erlaubt die Variation der optischen Weglänge.

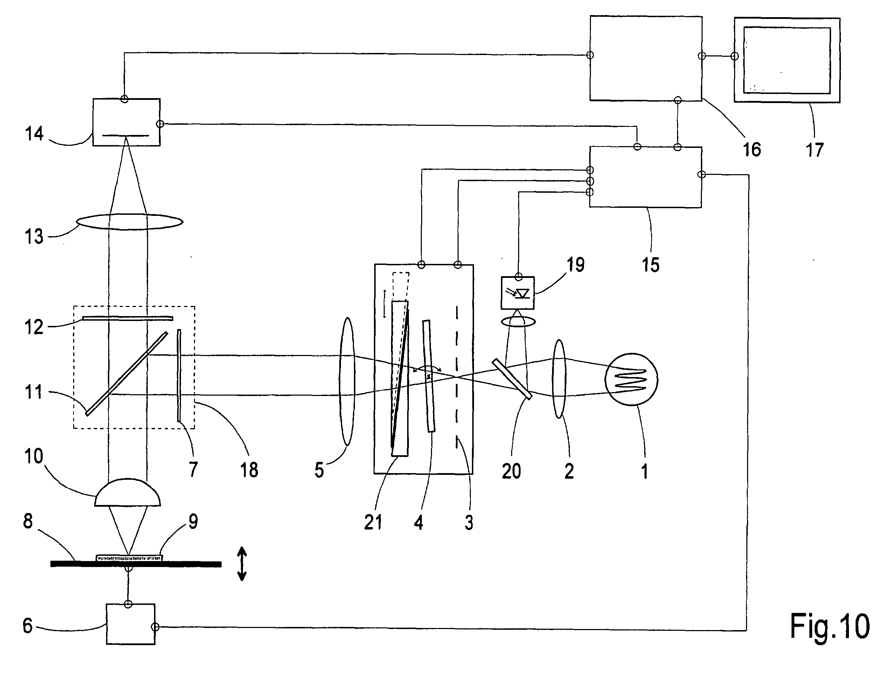

In Abbildung 10 ist die Änderung der optischen Weglänge zur Korrektur der chromatischen Längsfehler mittels optischer Keile (Abbildung 9) in eine Ausführung des optische Systems integriert dargestellt. Die Darstellung entspricht bis auf die Keilanordnung (21) der Abbildung 3.

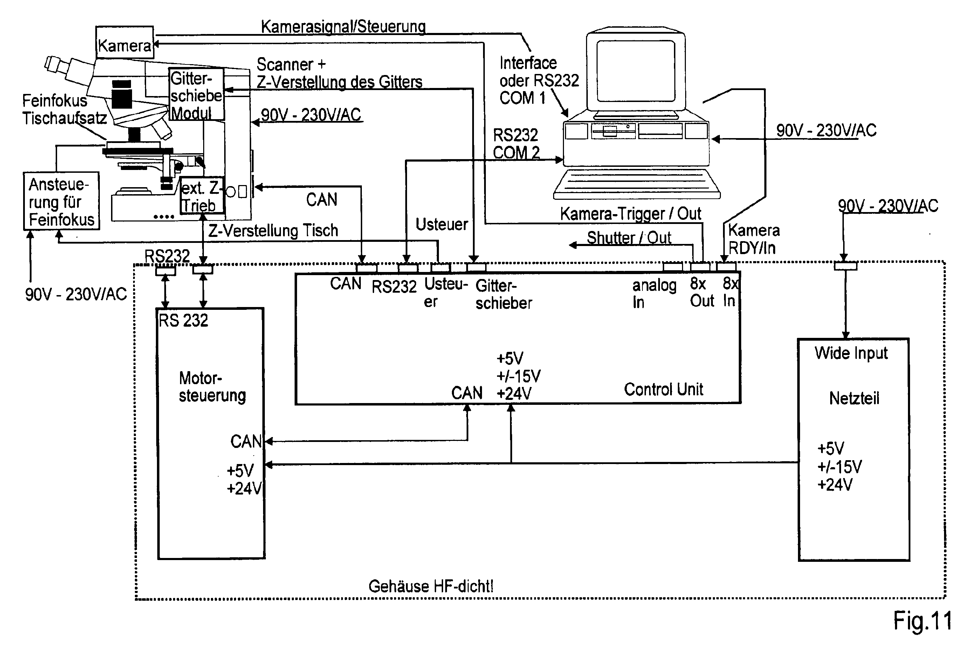

In Abbildung 11 ist eine Ansicht des Mikroskopsystems und den elektronischen Komponenten schematisch dargestellt.

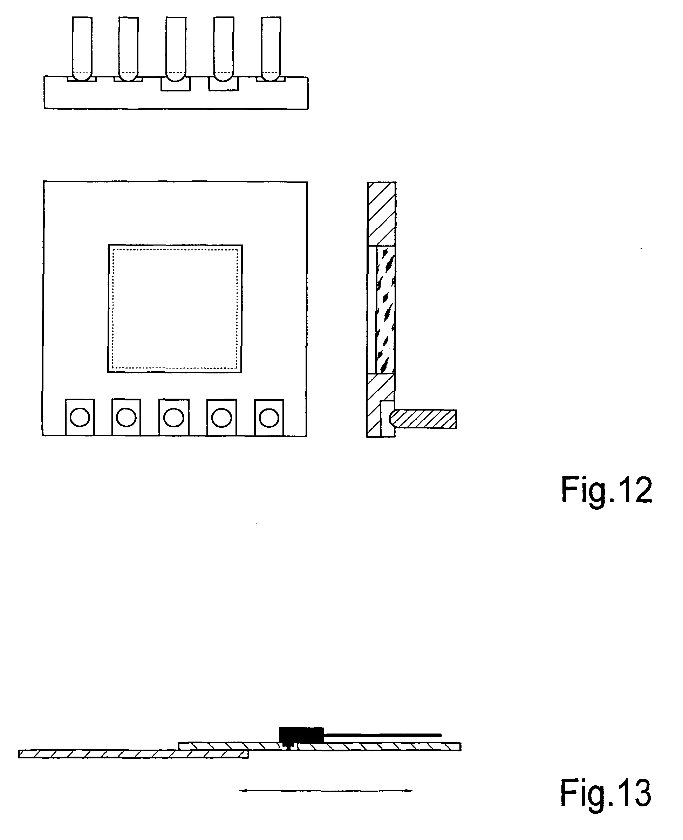

In Abbildung 12 ist der Träger des Gitters aus Abbildung 7 (2) in codierter Ausführung dargestellt. Die dargestellten 5 elektronischen Kontakte werden durch die ebenfalls dargestellten leitenden Stifte zur Realisierung der gewünschten binären Information zur automatischen Erkennung von den implementierten Gitterträgern verwendet. Insbesondere bei mechanisch wechselbaren Gittern ist die Codierung der Gitter sinnvoll, um durch die automatische Erkennung Fehler des Anwenders durch z.B. falsch eingestellte Orts-Phasen zur Berechnung von Schnittbildern zu vermeiden.

In Abbildung 13 ist eine Realisierung zur automatischen Erkennung eines mechanischen Moduls dargestellt. Bei der durch den Pfeil angedeuteten relativen Bewegung der beiden Grenzflächen kann ein photoempfindlicher Empfänger abgedeckt bzw. geöffnet werden. Dadurch ist eine automatische Positionserkennung realisierbar.

**1.2 Beschreibung der Methode**

Die Erfindung betrifft ein Verfahren zur Tiefendiskriminierung in optisch abbildenden Systemen nach den Ansprüchen 1-3.

Im folgenden wird das Prinzip der strukturierten Beleuchtung dargestellt. In der Ebene der Leuchtfeldblende (LFB) eines Mikroskops befindet sich eine Struktur. Bei der Struktur soll es sich im folgenden um eine 1 oder 2-dim periodische Struktur handeln. Die 1-oder 2-dimensionalen periodischen Struktur (Gitter) kann z.B. ein lithographisch gefertigtes Transmissions oder Reflexionsgitter sein. Das Gitter kann sowohl eine binäre (Rechteckgitter) oder auch sinusförmige Gestalt (Sinusgitter) besitzen. Das Gitter wird über geeignete optische Elemente (beleuchtungsseitige Tubuslinse, und z.B. Objektiv) in die Objektebene abgebildet. In der Objektebene befindet sich z.B: ein reflektierendes oder fluoreszierendes Objekt. Die laterale Struktur der Beleuchtungsintensität führt bei einer linearen Wechselwirkung zu einem strukturierten Objekt. Das strukturierte Objekt wird wiederum über das Objektiv und die TV-seitige Tubuslinse in die nachfolgende Zwischenbildebene abgebildet und mittels Array Detektor registriert (siehe Abbildung). Die Sensorfläche des Detektors befindet sich dazu in der Zwischenbildebene (TV-Ausgang am Mikroskop).

Die Erhöhung des Tiefenkontrasts bei einer mikroskopischen Aufnahme mit der strukturierten Beleuchtung ist letzlich darauf zurückzuführen, daß nur der Mittelwert (oder DC-Anteil) bei einer konventionellen mikroskopischen Abbildung bei einer Defokussierung nicht verschwindet. Wird hingegen ein Objekt mit einer Struktur beleuchtet, deren Ortsfrequenz (en) ungleich null ist, und wertet man anschließend nur den Anteil der Bildinformation aus, der strukturiert abgebildet wurde, so kann der DC-Anteil (Nullfrequenz) numerisch entfernt werden. Dadurch wird der Tiefenkontrast erhöht. Die Struktur der Beleuchtung "markiert" den Teil des Objekts der sich im Fokus des optischen Systems befindet. Zur Berechnung optischer Schnitte muß im Wesentlichen die Modulationstiefe (= AC-Anteil) des strukturierten Objekts pixelweise bestimmt werden. Im einfachsten Fall einer 1-dimensional periodischen, sinusförmigen Struktur, ist bei einer linearen Wechselwirkung die bildseitige Intensität $I = I(x,y, \varphi)$ mit den Orts-Variablen x,y und dem Parameter für den Orts-Phasenwinkel der periodischen Struktur $\varphi$ gegeben durch

$$I(x,y,\varphi) = a_{0_{x,y}} + m_{x,y} \cdot \sin(k_x \cdot x + \varphi)$$

Gleichung 1

mit der lokal abhängigen Modulationstiefe $m_{x,y} =: m(x,y)$.

Die Modulationstiefe ist dabei einerseits abhängig von der Gitterfrequenz, der abbildenden Optik und von dem betrachteten Objekt.
Unter Verwendung der Additionstheoreme läßt sich dies schreiben als

$$I_{x,y}(\varphi) = a_{0_{x,y}} + a_{1_{x,y}} \cdot \sin(\varphi) + b_{1_{x,y}} \cdot \cos(\varphi) \qquad \text{Gleichung 2}$$

Dabei ist $\varphi$ der Phasenwinkel der sinusförmigen strukturierten Beleuchtung, $a_{0_{x,y}}$ der DC-Anteil (=Mittelwert) und

$$a_{1_{x,y}} = m_{x,y} \cos(k_x x) \qquad \text{Gleichung 3}$$

$$b_{1_{x,y}} = m_{x,y} \sin(k_x x) \qquad \text{Gleichung 4}$$

damit folgt sofort für die lokale Modulationstiefe der Sinusfrequenz

$$m_{x,y} = \frac{\sqrt{a_{1x,y}^2 + b_{1x,y}^2}}{a_{0x,y}} \propto \sqrt{a_{1x,y}^2 + b_{1x,y}^2} \qquad \text{Gleichung 5a}$$

Ein optisches Schnittbild ist gerade die mit der Bild-Intensität (=DC-Anteil) multiplizierte Modulationstiefe

$$I_{sectioned_{xy}} = m_{x,y}' = m_{x,y}\overline{I} = \sqrt{a_{1x,y}^2 + b_{1x,y}^2} \qquad \text{Gleichung 5b}$$

Zusätzlich kann der Phasenwinkel berechnet werden

$$\tan(\varphi) = -\frac{a_{1x,y}}{b_{1x,y}} \qquad \text{Gleichung 6}$$

Die zunächst von der Modulationsfrequenz abhängigen Koeffizienten $a_{1_{x,y}}$ und $b_{1_{x,y}}$ und der lokal abhängige Mittelwert können andererseits durch Änderung der Phase mit der diskreten Fourierentwicklung wie folgt geschrieben werden

$$a_{0_{x,y}} = \overline{I} = \frac{1}{N} \sum_{n=0}^{N-1} I_{x,y}\left(n\frac{2\pi}{N}\right) \qquad \text{Gleichung 7}$$

$$a_{1_{x,y}} = \frac{2}{N} \sum_{n=0}^{N-1} \sin\left(n\frac{2\pi}{N}\right) I_{x,y}\left(n\frac{2\pi}{N}\right) \qquad \text{Gleichung 8}$$

EP 1 307 774 B1

$$b_{1_{x,y}} = \frac{2}{N} \sum_{n=0}^{N-1} \cos\left(n\frac{2\pi}{N}\right) I_{x,y}\left(n\frac{2\pi}{N}\right) \qquad \text{Gleichung 9}$$

Dabei ist N die Anzahl der Phasenschritte.

Durch einsetzen der Gleichungen 7-9 in die Gleichung 5 kann die lokale Modulationstiefe $m_{x,y}$ berechnet werden. Für drei bzw. vier Phasenschritte vereinfachen sich die Formeln für die letztlich gesuchten optischen Schnitte zu.

$$I_{\text{sectioned } xy} = m_{x,y}'$$
$$= \frac{\sqrt{2}}{3}\left\{ \sqrt{\left[ I_{x,y}(0) - I_{x,y}\left(\frac{2\pi}{3}\right)\right]^2 + \left[ I_{x,y}(0) - I_{x,y}\left(\frac{4\pi}{3}\right)\right]^2 + \left[ I_{x,y}\left(\frac{2\pi}{3}\right) - I_{x,y}\left(\frac{4\pi}{3}\right)\right]^2 } \right\}$$

<div align="right">Gleichung 10</div>

für drei Phasenschritte (0, 2π/3, 4π/3 ) bzw.

$$I_{\text{sectioned } xy} = m_{x,y}' = \frac{1}{2}\sqrt{\left[ I_{x,y}(0) - I_{x,y}(\pi)\right]^2 + \left[ I_{x,y}\left(\frac{\pi}{2}\right) - I_{x,y}\left(\frac{3\pi}{2}\right)\right]^2} \qquad \text{Gleichung 11}$$

für vier Phasenschritte (0, π/2, π, 3π/2)

Zur Berechnung des DC-Anteils ist der "Mittelwert" über die Phasenbilder zu berechnen (Gleichung 7). Für drei Phasenwinkel ergibt sich

$$\bar{I}_{x,y} = a_{0_{x,y}} = \frac{1}{3}\left( I_{x,y}(0) + I_{x,y}\left(\frac{2\pi}{3}\right) + I_{x,y}\left(\frac{4\pi}{3}\right)\right) \qquad \text{Gleichung 12a}$$

und entprechend für vier Phasenwinkel

$$\bar{I}_{x,y} = a_{0_{x,y}} = \frac{1}{4}\left( I_{x,y}(0) + I_{x,y}\left(\frac{\pi}{2}\right) + I_{x,y}(\pi) + I_{x,y}\left(\frac{3\pi}{2}\right)\right) \qquad \text{Gleichung 12b}$$

Der einfachste Fall ist die Berechnung des Mittelwerts mit 2 Phasenschritten.

$$\bar{I}_{x,y} = a_{0_{x,y}} = \frac{1}{2}\left( I_{x,y}(0) + I_{x,y}(\pi)\right) \qquad \text{Gleichung 12c}$$

Aufgrund des Verschiebungssatzes für die trigonometrischen Funktionen werden bei der Berechnung mithilfe der letzten Gleichungen 12c die Modulationsfrequenzen eliminiert. Besonders vorteilhaft ist dieser einfache Algorithmus dadurch, daß auch bei Verwendung eines Rechteckgitters (s.u.) alle höheren Harmonischen des Rechteckgitters unterdrückt werden. Für $N = 2^n$, $n$ eine natürliche Zahl ist dies immer der Fall Im allg. bei Verwendung von mehr als 2 Phasenschritten ist dies nicht der Fall. Z.B. führt bei drei Phasenschritten (Gleichung 12a) die dritte Harmonische bei der Mittelwertbildung zu streifenförmigen Artefakten.

Der allgemein mit Gleichung 7 bzw. Gleichung 12 berechnete DC-Anteil entspricht der konventionellen Aufnahme im Mikroskop. Der Tiefenkontrast ist dann nicht erhöht. Vorteilhaft ist die Berechnung der "Hellfeldinformation" mit Gleichung 7 (12) insbesondere applikativ, da durch dieses Processing ein "Umschalten" von optischem Schnitt zu konventioneller Aufnahme ermöglicht wird, ohne daß ein mechanisches Entfernen der Struktur aus dem Strahlengang nötig ist.

Wird sowohl der DC-Anteil als auch ein optischer Schnitt (AC-Anteil) berechnet, so kann (nach geeigneter Kalibrierung) auch die "Out-of-Focus" Information durch Differenzbildung (DC - AC) bestimmt werden.

Bei Verwendung eines Rechteckgitters kann zur Darstellung die folgende Reihenentwicklung zur Beschreibung verwendet werden.

$$I(x,y,\varphi) = a_{0_{x,y}} + \sum_{i=0}^{\infty} \frac{m_{k_{s}(2i+1)_{x,y}} \sin\left(k_x(2i+1)\left(x+\frac{\varphi}{k_x}\right)\right)}{(2i+1)} \qquad \text{Gleichung 13}$$

Die Modulationstiefe der Gitterfrequenz bei Fokussierung z.B. auf einen Spiegel als Probe kann durch die Modulationstransferfunktion beschrieben werden [T. Wilson].

$$m_k = \frac{2}{\pi}\left[a\cos\left(\frac{k\lambda}{2\,NA}\right) - \frac{k\lambda}{2\,NA}\sqrt{1-\left(\frac{k\lambda}{2\,NA}\right)^2}\right]^2 \qquad \text{Gleichung 14}$$

bei inkohärenter Beleuchtung und Auflicht-Beleuchtung. Dabei ist

$NA$ = numerische Apertur

$\lambda$ = Wellenlänge

$k$ = Ortsfrequenz

Obige Formel gilt für kreisförmige Pupillen. Bei Defokussierung ist eine Wellenabberation als komplexer Phasenfaktor mit der Pupillenfunktion zu multiplizieren.

Anhand der Gleichung 10 erkennt man, daß die 3-Phasenformel implizit die 3.Harmonische der Fourierentwicklung eines Rechteckgitters (Gleichung 13, i=1) unterdrückt. Erst die 5. Harmonische (i=2) führt zu einem Störterm und damit zu einer Restmodulation (Artefakt). Wird das 1-dim Gitter so dimensioniert, daß die 5. Harmonische durch den "optischen Tiefpaß" nicht übertragen werden kann, d.h. größer gewählt wird als die optische Grenzfrequenz

$$k_{limit} = \frac{2\,NA}{\lambda} \qquad \text{Gleichung 15}$$

können die Artefakte durch höhere Harmonische vollständig unterdrückt werden.

Bei Anwendung der Gleichung 11, d.h. bei Verwendung von vier Phasenschritten zur Berechnung der (lokalen) Modulationstiefe ist dies nicht der Fall. Gleichung 11 kann damit im Zusammenhang mit Rechteckgittern nur eingeschränkt verwendet werden, z.B. für den Fall, daß bereits die 3. Harmonische in der Fourierentwicklung durch die Optik nicht übertragen wird. Vorteilhaft ist bei Gleichung 11 unter dieser zusätzlichen Voraussetzung, daß die 2.Harmonische des Gitters implizit durch den Algorithmus unterdrückt werden kann.

### 1.3 Technische Ausführungen

Technische Ausführungen sind in den Abbildungen 3 und 4 und weitere Details zu den Ausführungen in den Abbildungen 5-8 dargestellt.

Die folgenden Details der Ausführungen, die in den abbildenden Systemen für die Anwendung in der Fluoreszenz-Mikroskopie (Abbildung 3) und der Reflexionsmikroskopie (Abbildung 4) angewendet werden sollen an dieser Stelle nochmals herausgestellt werden.

Es handelt sich dabei um die folgenden relevanten Ausführungen.

- Die Phasenstellung durch eine planparallele Platte (Planplattenmikrometer)

- Die (motorische) Bewegung des Gitters in axialer Richtung zur Korrektur chromatischer Längsfehler (Fokuskorrektur)

- Die Korrektur von Instabilitäten der Lichtquelle durch Messung der Lichtintensität mittels Photodetektor (typischerweise einer Photodiode) und anschließender numerischer Korrektur durch Skalierung der erfaßten Einzel-Phasenbilder

- Die Korrektur von z.B. Bleichen der Farbstoffe in der Fluoreszenz-Mikroskopie durch ein optimiertes Mittelungsverfahren.

- Die Realisierung eines schnellen Shutters mittels Scanner entsprechend Abbildung 5

- Die Korrektur z.B. statistischer Änderungen der Ortsphase des Gitters durch lösen eines Gleichungssystems.

- Die Realisierung eines Systems zur Verwendung eines 2-dimensionalen Gitters unter Verwendung von zwei orthogonalen Planplattenmikrometern.

### 1.3.1 Phasenverschiebung durch eine planparallele Platte

Die Einstellung der Phasenlage des Gitters kann vorteilhaft durch eine Parallelverschiebung realisiert werden (Planplattenmikrometer). Das Prinzip ist in Abbildung 6 dargestellt. Eine planparallele Glasplatte (Material zB. BK7) wird nach dem Gitter angeordnet und z.B. durch einen galvanischen Scanner wohldefinierte Winkel eingestellt. Die Verwendung eines Scanners bietet insbesondere den Vorteil einer präzisen und schnellen Einstellung des Winkels. Technisch möglich sind hier typische Stellwinkel etwa im Bereich +/- 15˚ mit einer Stellgenauigkeit von <50 $\mu$rad. bei einer Einstellzeit <5ms. Die Datenaufnahme synchron zum Detektor kann auf zwei Arten realisiert werden:

- durch eine kontinuierliche Bewegung der planparallelen Platte und Synchronisation mit der Kamera
- durch schrittweises, sequentielles anfahren der Scanposition

Die sequentielle Positionierung bietet den Vorteil einer höheren Modulationstiefe (=Kontrast) des strukturierten Objekts bzw. einer Unabhängigkeit des Kontrasts von dem Verhältnis Belichtungszeit/Auslesezeit der Kamera.

Um einerseits die anregungsseitige Transmission zu optimieren und andererseits Vielfachreflexionen an der planparallelen Platte zu minimieren, ist es vorteilhaft die Reflexionen an allen optischen Komponenten, insbesondere der Struktur (bzw. dem Substrat) und der planparallelen Platte durch Antireflexbeschichtungen zu minimieren. Außerdem ist es vorteilhaft, die planparallele Platte unter einem kleinen Winkel (ungleich 0˚) in den optischen Strahlengang einzufügen. Damit können störenden Reflexionen ausgeblendet werden.

### 1.3.2 Fokuskorrektur, Ausgleich von chromatischer Längsabberation

Wenngleich die Abbildung von z.B: fluoreszierenden und reflektierenden Objekten in einigen Punkten identisch ist, so ergeben sich durch die bei z.B. fluoreszierenden Objekten vorhandenen Unterschiede von Anregungs- zu Emissionswellenlänge (Stokesshift) einige wesentliche zu beachtenden Punkte.
Da in der Regel auch chromatisch korrigierte Objektive einen chromatischen Längsfehler aufweisen, befinden sich Gitter, Objekt und TV-Zwischenbildebene jeweils nur für eine Anreguns/Emissionswellenlänge in den optisch konjugierten Ebenen. Bei einer Änderung der spektralen Verhältnisse (Filterwechsel) oder bei einem Austausch der Objektive ist die einmal eingestellte Scharfstellung von Objekt, Gitter und Kamera nicht mehr gegeben. Dies führt einerseits zu einer Verringerung des Kontrasts im strukturierten Bild, andererseits bei größeren Farblängsfehlern zu streifenförmigen Artefakten im errechneten optischen Schnittbild.
Die Scharfstellung des Objekts auf die Kamera ZB Ebene kann durch nachfokussieren realisiert werden. Zusätzlich ist aber die Korrektur der Gitterposition relativ zur Objektebene notwendig. In diesem Patentantrag wird die vorteilhafte Verwendung einer manuellen oder motorischen Verstellmöglichkeit zur Scharfstellung des Gitters auf das Objekt dargestellt. Dies kann bei der Verwendung einer ICS Optik auf zwei verschiedene Arten umgesetzt werden:

a) Verschiebung der "Tubuslinse" in Abbildung 1
b) Verschiebung der Gitterposition in Abbildung 2

Auch bei substantiell identischen Wellenlängen für Anregung und Detektion (Reflexionsmikroskopie) kann durch chromatische Abberationen eine axiale Bewegung der Struktur bzw. der beleuchtungsseitigen Tubuslinse zur Korrektur notwendig werden. Insbesondere ist dies bei einem Wechsel von z.B. sichtbarem Spektralbereich zu UV der Fall.

Die Anpassung der Gitterposition kann z.B. durch eine exzentrische Bewegung realisiert werden. (Abbildung 7a,7b). Bei ausreichenden Platzverhältnissen (bzw. ausreichend geringer notwendiger Fokuskorrektur) ist auch die Verwendung eines optischen Keils und damit der Veränderung der optischen Weglänge möglich (Abbildung 9,10).

### 1.3.3 Korrektur der zeitlichen Intensitäts-Instabilität der Lichtquelle

Eine zeitliche Änderung der Intensität der Lichtquelle während der Detektion der im allgemeinen N >=3 "Phasenbilder" führt zu streifenförmigen Artefakten im berechneten optischen Schnittbild, da in der Ableitung obiger Formeln eine zeitlich konstante Lichtquelle vorausgesetzt wird. Um diesen im Bezug auf die Bildqualität störenden Einfluß zeitabhängiger Änderungen der Beleuchtung zu eliminieren bzw. zu minimieren, kann wie folgt vorgegangen werden. In einem ersten Schritt wird die Intensität der Lichtquelle z.B. durch Abbildung auf einen lichtempfindlichen Empfänger -z.B. eine handelsübliche Photodiode -ein Meßwert für die Beleuchtungs-Intensität gewonnen (in den Abbildung 3,4,5 dargestellt). Das Zeitintervall für die Integration ist dabei auf das Zeitintervall für die Belichtung des CCD-Chips der Kamera abzustimmen. Das Spannungssignal der Photodioden-Schaltung wird anschließend über einen AD-Wandler digitalisiert. Nach Messung der N Einzelbilder mit den Ortsphasen

$$\varphi_n = \frac{2\pi n}{N} \qquad\qquad \text{Gleichung 16}$$

können diese z.B. wie folgt normiert werden.

$$I_{norm\,x,y}(\varphi_n) = \frac{I_{x,y}(\varphi_n)}{C(\varphi_n)} \qquad\qquad \text{Gleichung 17}$$

mit dem über die Phasenbilder gemittelten digitalisierten Photodiodensignal

$$\overline{PD_{Signal}} := \frac{\sum_{n=0}^{N-1} PD_{Signal}(\varphi_n)}{N} \qquad\qquad \text{Gleichung 18}$$

und dem Korrekturfaktor

$$C(\varphi_n) := \frac{PD_{Signal}(\varphi_n)}{\overline{PD_{Signal}}} \qquad\qquad \text{Gleichung 19}$$

### 1.3.4 Phasen instabilität, Phasenstellgeschwindigkeit

Um die Phaseninstabilität zu minimieren, ist es vorteilhaft einen temperaturstabilisierten galvanischen Scanner (z.B. M2T, Fa. General Scanning ) zu verwenden. ein solcher Scanner gestattet auch eine kurze Phasenstellzeit von wenigen Millisekunden. Um die Phasenstabilität zu optimieren, wird der Scanner elektronisch über einen geschlossenen Regelkreis angesteuert.

Zusätzlich kann eine SW-Korrektur von Phaseninstabilitäten durch Messung der Phasen und anschließende Approximation mit einer Sinusfunktion nach dem im folgenden beschriebenen Verfahren durchgeführt werden.

Während in Gleichung 7-9 von einer exakten Verschiebung der projizierten Struktur um jeweils ein N-tel der Periode ausgegangen wird, läßt sich die Modulationstiefe auch ermitteln, wenn die Intensität bei drei oder mehr nahezu beliebigen Positionen aufgenommen wird. Zunächst muß dabei der Phasenwinkel φ in Gleichung 1 für alle Positionen der Struktur gemessen werden. Dies kann auf unterschiedliche Weise geschehen:

1. Durch Messung am Mechanischen Stellglied, welches für die Verschiebung der Struktur verantwortlich ist (z.B. Scanner).
2. Durch Bestimmung aus dem aufgenommenen Bild z.B. durch Fouriertransformation oder durch Approximation der aufgenommen Intensitätswerte mit einer Sinusfunktion.
3. Bestimmung wie unter 2. jedoch mit einem Sensor, der die projizierte Struktur direkt aufnimmt. Dies kann auch dadurch erreicht werden, daß ein optisches Element im Strahlengang angeordnet wird, das die Struktur direkt auf einem Teilbereich des Detektors abbildet, welcher auch zur Aufnahme der Intensitäten von der Probe verwendet wird.

Bei der Bestimmung der Verschiebung der Struktur ist es ausreichend die Verschiebung relativ zur ersten Position zu bestimmen.

Zur Bestimmung der Modulationstiefe betrachten wir N Intensitätswerte die bei N Positionen der Struktur aufgenommen wurden und vergeben in Gleichung 2 für die n-te Position den Index n.

$$I_{x,y}(\varphi_n) = a_{0_{x,y}} + a_{1_{x,y}} \cdot \sin(\varphi_n) + b_{1_{x,y}} \cdot \cos(\varphi_n) \qquad \text{Gleichung 20}$$

Die gemessenen Intensitäten $M_{x,y}(\varphi_n)$ können von den zu erwartenden Intensitäten $I_{x,y}(\varphi_n)$ abweichen. Zur Approximation kann das Verfahren der kleinsten Fehlerquadrate verwendet werden:

$$\sum_{n=0}^{N-1}\left(M_{x,y}(\varphi_n) - I_{x,y}(\varphi_n)\right)^2 \to \min \qquad \text{Gleichung 21}$$

Die Ableitungen nach $a_{0_{x,y}}$, $a_{1_{x,y}}$ und $b_{1_{x,y}}$ liefern das lineare Gleichungssystem

$$\begin{pmatrix} N & \sum_{n=0}^{N-1}\sin(\varphi_n) & \sum_{n=0}^{N-1}\cos(\varphi_n) \\ \sum_{n=0}^{N-1}\sin(\varphi_n) & \sum_{n=0}^{N-1}\sin^2(\varphi_n) & \sum_{n=0}^{N-1}\sin(\varphi_n)\cos(\varphi_n) \\ \sum_{n=0}^{N-1}\cos(\varphi_n) & \sum_{n=0}^{N-1}\sin(\varphi_n)\cos(\varphi_n) & \sum_{n=0}^{N-1}\cos^2(\varphi_n) \end{pmatrix} \bullet \begin{pmatrix} a_{0x,y} \\ a_{1x,y} \\ b_{1x,y} \end{pmatrix} = \begin{pmatrix} \sum_{n=0}^{N-1}M_{x,y}(\varphi_n) \\ \sum_{n=0}^{N-1}\sin(\varphi_n)M_{x,y}(\varphi_n) \\ \sum_{n=0}^{N-1}\cos(\varphi_n)M_{x,y}(\varphi_n) \end{pmatrix} \qquad \text{Gleichung 22}$$

Das Gleichungssystem ist lösbar für N>2. Die Matrix ist nur von den Positionen abhängig und braucht zur Lösung des Systems nur einmal pro Bildsequenz invertiert zu werden. Die Modulationstiefe erhält man dann aus $a_{1_{x,y}}$ und $b_{1_{x,y}}$ mit Gleichung 5.

Das Verfahren kann in vergleichbarer Weise auch auf die Fälle erweitert werden, wo die projizierte Struktur nicht sinusförmig ist, indem mit einer anderen Funktion approximiert wird.

**1.3.5 Minimieren des Bleichens der Farbstoffe in Fluoreszenzanwendungen**

Um den Effekt des Ausbleichens von Farbstoffen zu minimieren, wird die zu untersuchende Probe idealerweise nur während der Kamera-Belichtungszeit beleuchtet. Der Einfluß einer Dauerbelichtung während der Aufnahme von z.B. drei einzelnen Phasenbildern zur erzeugung eines optischen Schnittes wird um so größer, je kürzer die Belichtungszeit im Vergleich zur Datenübertragungszeit (von der Kamera zum PC) gewählt werden kann und je höher die Belichtungsintensität gewählt wird. Typische Datenübertragungszeiten für Digitale CCD-Kameras liegen z.Zt im Bereich von etwa 10-100 ms bei einer Auflösung von etwa 512x512 Pixel/Bild. Bei Belichtungszeiten in diesem Zeitbereich wird bereits die Probe unter Umständen signifikant beschädigt, ohne die Fluoreszenemission während der Datenübertragung zu nutzen. Um die Probe möglichst schonend zu behandeln ist es wünschenswert einen schnellen beleuchtungsseitigen Verschluß (Shutter) zu integrieren.

Eine einfache Lösung besteht in der Verwendung von elektromagnetischen "Uniblitz" Shuttern der Fa. Vincent Associates , 1255 University Avenue , Rochester, New York 14607. Eine alternative Lösung besteht in der in Abbildung 5 dargestellten Anordnung. Der dargestellte Shutter besteht aus einem Planspiegel (22), dessen Winkel zur optischen Achse mittels z.B. Scanner eingestellt werden kann, einem nachfolgenden Prisma (21) und einem feststehenden Spiegel (23). Durch diese Kombination kann eine "offene" oder Durchgangsstellung (Strahlengang mit durchgezogenen Linien) und eine "geschlossene" oder Verschluß-Stellung (Strahlengang gestrichelt) realisiert werden. Die möglichen Schaltzeiten sind abhängig von dem verwendeten Scanner und der Größe des Planspiegels. Typische Schaltzeiten für Spiegeldurchmesser von ca. 25 mm liegen bei etwa 1 ms.

**1.3.6 Algorithmus zur Minimierung von Artefakten durch Bleichen von Farbstoffen in Fluoreszenzanwendungen**

Um Bleichen von Farbstoffen zu kompensieren kann bei einem linearen Ansatz die folgende Reihenfolge für die Aufnahme der Phasenbilder verwendet werden

$$I_{x,y}(0), I_{x,y}\left(\frac{2\pi}{3}\right), I_{x,y}\left(\frac{4\pi}{3}\right), I_{x,y}\left(\frac{4\pi}{3}\right), I_{x,y}\left(\frac{2\pi}{3}\right), I_{x,y}(0)$$

Die Reihenfolge der oben dargestellten Sequenz steht dabei für die zeitliche Reihenfolge der Acquisition der Phasenbilde. Aus den jeweils 3 Phasenbildern

$$I_{x,y}(0), I_{x,y}\left(\frac{2\pi}{3}\right), I_{x,y}\left(\frac{4\pi}{3}\right)$$

und

$$I_{x,y}\left(\frac{4\pi}{3}\right), I_{x,y}\left(\frac{2\pi}{3}\right), I_{x,y}(0)$$

sind z.B. jeweils die optischen Schnitte unter Verwendung der Gleichung 10 zu berechnen und der Mittelwert zu bilden.

$$\overline{I_{\text{sectioned}\,xy}} = \frac{I_{\text{sectioned}\,xy}\left(0, \frac{2\pi}{3}, \frac{4\pi}{3}\right) + I_{\text{sectioned}\,xy}\left(\frac{4\pi}{3}, \frac{2\pi}{3}, 0\right)}{2} \qquad \text{Gleichung 24}$$

Damit wird in einer linearen Näherung des Bleichvorgangs die Artefaktbildung im berechneten optischen Schnittbild minimiert.

*1.4 Gittererkennung, Modulerkennung*

Um ein einfaches mechanisches Umschalten von konventioneller Mikroskopaufnahme zur strukturierten Beleuchtung und umgekehrt zu ermöglichen, ist es vorteilhaft eine freie Position mit einer Leuchtfeldblende mit dem Gitter zu kombinieren. Diese Situation ist in Abbildung 8 dargestellt.

Da bei der strukturierten Beleuchtung die Tiefendiskriminierung u.a. von der effektiven Gitterfrequenz abhängt diese wiederum durch die beleuchtungsseitige Gesamt-Vergrößerung (Tubuslinse + Kondensor bzw. Objektiv) bestimmt wird, ist es vorteilhaft eine einfache Möglichkeit zu schaffen um die bei der Projektionverwendeten Gitter auswechseln zu können

Um Fehler bei falsch eingesetzten Gittern zu vermeiden ist es vorteilhaft z.B: die mechanisch gefaßten Gitter zu codieren. Dazu kann die in Abbildung 12 dargestellte Codierung verwendet werden.

**Patentansprüche**

1. Verfahren zur Tiefendiskriminierung in optisch abbildenden Systemen, welche Mittel zur Projektion einer periodischen Struktur in das Objekt aufweisen, welches aus den Schritten:

   • Detektion von N,N>=3 strukturierten Bildern des Objekts mit Phasenwinkeln

$$\varphi_n = n\frac{2\pi}{N}, \quad n = 0..N-1$$

   der projizierten Struktur
   • Erzeugung optischer Schnitte durch Auswerten der Bilder mit den N unterschiedlicher Phasenwinkeln mit Gleichung

$$I_{sectioned} = m_{x,y}{}' = m_{x,y}\bar{I} = \sqrt{a_{1x,y}{}^2 + b_{1x,y}{}^2}$$

   wobei die $a_{1x,y}$ und $b_{1x,y}$

$$I_{x,y}(\varphi_n) = a_{0x,y} + a_{1x,y}\cdot\sin(\varphi_n) + b_{1x,y}\cdot\cos(\varphi_n),$$

   und

$$\sum_{n=0}^{N-1}\left(M_{x,y}(\varphi_n) - I_{x,y}(\varphi_n)\right)^2 \to \min,$$

   aus den gemessenen Intensitäten $M_{x,y}(\varphi_n)$ durch Lösen des durch

$$\begin{pmatrix} N & \sum_{n=0}^{N-1}\sin(\varphi_n) & \sum_{n=0}^{N-1}\cos(\varphi_n) \\ \sum_{n=0}^{N-1}\sin(\varphi_n) & \sum_{n=0}^{N-1}\sin^2(\varphi_n) & \sum_{n=0}^{N-1}\sin(\varphi_n)\cos(\varphi_n) \\ \sum_{n=0}^{N-1}\cos(\varphi_n) & \sum_{n=0}^{N-1}\sin(\varphi_n)\cos(\varphi_n) & \sum_{n=0}^{N-1}\cos^2(\varphi_n) \end{pmatrix}\bullet\begin{pmatrix} a_{0x,y} \\ a_{1x,y} \\ b_{1x,y} \end{pmatrix} = \begin{pmatrix} \sum_{n=0}^{N-1}M_{x,y}(\varphi_n) \\ \sum_{n=0}^{N-1}\sin(\varphi_n)M_{x,y}(\varphi_n) \\ \sum_{n=0}^{N-1}\cos(\varphi_n)M_{x,y}(\varphi_n) \end{pmatrix}$$

   gegebenen Gleichungssystems bestimmt werden,
   berechnet werden, besteht.

2. Verfahren zur Tiefendiskriminierung nach Anspruch 1, wobei zur Normierung der Bildhelligkeit das digitalisierte Signal PD eines lichtempfindlichen Detektors unter Verwendung der Gleichung

$$I_{norm\,x,y}(\varphi_n) = \frac{\bar{I}_{x,y}(\varphi_n)}{C(\varphi_n)}$$

mit dem über die Phasenbilder gemittelten digitalisierten Photodiodensignal

$$\overline{PD_{Signal}} := \frac{\sum_{n=0}^{N-1} PD_{Signal}(\varphi_n)}{N}$$

und dem Korrekturfaktor

$$C(\varphi_n) := \frac{PD_{Signal}(\varphi_n)}{\overline{PD_{Signal}}}$$

normiert wird.

3. Verfahren zur Tiefendiskriminierung nach einem der vorangehenden Ansprüche, wobei zur Minimierung von Artefakten die Anwendung einer Mittelung nach Gleichung

$$\overline{I_{sectioned\,xy}} = \frac{I_{sectioned\,xy}\left(0, \frac{2\pi}{3}, \frac{4\pi}{3}\right) + I_{sectioned\,xy}\left(\frac{4\pi}{3}, \frac{2\pi}{3}, 0\right)}{2}$$

durchgeführt wird.

## Claims

1. Method of depth discrimination in optically imaging systems which comprise means for the projection of a periodic structure into the object, which is calculated from the steps of

   • detecting N, N>=3 structured images of the object with phase angles

   $$\varphi_n = n\frac{2\pi}{N}, \qquad n = 0..N-1$$

   of the projected structure
   • generating optical sections by evaluation of the images with the N different phase angles by the following equation

   $$I_{sectioned\,xy} = m_{x,y}' = m_{x,y}\overline{I} = \sqrt{a_{1x,y}^2 + b_{1x,y}^2}$$

   where $a_{1x,y}$ and $b_{1x,y}$ are determined according to the formulation

   $$I_{x,y}(\varphi_n) = a_{0x,y} + a_{1x,y} \cdot \sin(\varphi_n) + b_{1x,y} \cdot \cos(\varphi_n)$$

and

$$\sum_{n=0}^{N-1}\left(M_{x,y}(\varphi_n)-I_{x,y}(\varphi_n)\right)^2 \to \min$$

from the measured intensities $M_{x,y}(\varnothing_n)$ by solving the equation system given by

$$\begin{pmatrix} N & \sum_{n=0}^{N-1}\sin(\varphi_n) & \sum_{n=0}^{N-1}\cos(\varphi_n) \\ \sum_{n=0}^{N-1}\sin(\varphi_n) & \sum_{n=0}^{N-1}\sin^2(\varphi_n) & \sum_{n=0}^{N-1}\sin(\varphi_n)\cos(\varphi_n) \\ \sum_{n=0}^{N-1}\cos(\varphi_n) & \sum_{n=0}^{N-1}\sin(\varphi_n)\cos(\varphi_n) & \sum_{n=0}^{N-1}\cos^2(\varphi_n) \end{pmatrix} \cdot \begin{pmatrix} a_{0x,y} \\ a_{1x,y} \\ b_{1x,y} \end{pmatrix} = \begin{pmatrix} \sum_{n=0}^{N-1}M_{x,y}(\varphi_n) \\ \sum_{n=0}^{N-1}\sin(\varphi_n)M_{x,y}(\varphi_n) \\ \sum_{n=0}^{N-1}\cos(\varphi_n)M_{x,y}(\varphi_n) \end{pmatrix}$$

2. Method of depth discrimination as claimed in claim 1, wherein in order to scale image brightness the digitised signal PD of a light-sensitive detector is scaled using the equation

$$I_{norm\,x,y}(\varphi_n) = \frac{I_{x,y}(\varphi_n)}{C(\varphi_n)}$$

with the digitised photodiode signal averaged over the phase images

$$\overline{PD_{Signal}} := \frac{\sum_{n=0}^{N-1}PD_{Signal}(\varphi_n)}{N}$$

and the correction factor

$$C(\varphi_n) := \frac{PD_{Signal}(\varphi_n)}{\overline{PD_{Signal}}}$$

3. Method of depth discrimination as claimed in any one of the preceding claims, wherein in order to minimise artefacts the use of averaging according to the equation

$$\overline{I_{sectioned\,xy}} = \frac{I_{sectioned\,xy}\left(0,\frac{2\pi}{3},\frac{4\pi}{3}\right) + I_{sectioned\,xy}\left(\frac{4\pi}{3},\frac{2\pi}{3},0\right)}{2}$$

is carried out.

**Revendications**

1.  Procédé pour la discrimination en profondeur dans des systèmes de représentation optique, qui présentent des moyens pour la projection d'une structure périodique dans l'objet, lequel comprend les étapes suivantes :

    • Détection de N, N > = 3 images structurées de l'objet avec des angles de phase

$$\varphi_n = n\frac{2\pi}{N},$$

    n = O..N - 1 de la structure projetée
    • Génération de coupes optiques par l'analyse des images avec les N angles de phase différents avec l'équation suivante

$$I_{corboned\ n} = m_{x,y}' = m_{x,y}\bar{I} = \sqrt{a_{1x,y}^2 + b_{1x,y}^2}$$

    $a_{1x,y}$ et $b_{1x,y}$ étant déterminés selon l'hypothèse suivante

$$I_{x,y}(\varphi_n) = a_{0x,y} + a_{1x,y} \cdot \sin(\varphi_n) + b_{1x,y} \cdot \cos(\varphi_n)$$

    et

$$\sum_{n=0}^{N-1} (M_{x,y}(\varphi_n) - I_{x,y}(\varphi_n))^2 \rightarrow \min$$

    à partir des intensités $M_{x,y}(\varphi_n)$ mesurées par la résolution du système d'équations donné par

$$\begin{pmatrix} N & \sum_{n=0}^{N-1}\sin(\varphi_n) & \sum_{n=0}^{N-1}\cos(\varphi_n) \\ \sum_{n=0}^{N-1}\sin(\varphi_n) & \sum_{n=0}^{N-1}\sin^2(\varphi_n) & \sum_{n=0}^{N-1}\sin(\varphi_n)\cos(\varphi_n) \\ \sum_{n=0}^{N-1}\cos(\varphi_n) & \sum_{n=0}^{N-1}\sin(\varphi_n)\cos(\varphi_n) & \sum_{n=0}^{N-1}\cos^2(\varphi_n) \end{pmatrix} \bullet \begin{pmatrix} a_{0x,y} \\ a_{1x,y} \\ b_{1x,y} \end{pmatrix} = \begin{pmatrix} \sum_{n=0}^{N-1}M_{x,y}(\varphi_n) \\ \sum_{n=0}^{N-1}\sin(\varphi_n)M_{x,y}(\varphi_n) \\ \sum_{n=0}^{N-1}\cos(\varphi_n)M_{x,y}(\varphi_n) \end{pmatrix}$$

2.  Procédé pour la discrimination en profondeur selon la revendication 1, le signal numérisé PD d'un détecteur photosensible étant normalisé pour la normalisation de la luminosité d'image avec l'utilisation de l'équation suivante

$$I_{norm\,x,y}(\varphi_n) = \frac{I_{x,y}(\varphi_n)}{C(\varphi_n)}$$

avec le signal de photodiode numérisé calculé en moyenne pour les images de phase

$$\overline{PD_{Signal}} = \frac{\sum_{n=0}^{N-1} PD_{Signal}(\varphi_n)}{N}$$

et avec le facteur de correction suivant

$$C(\varphi_n) = \frac{PD_{Signal}(\varphi_n)}{\overline{PD_{Signal}}}$$

3. Procédé pour la discrimination en profondeur selon l'une quelconque des revendications précédentes, l'utilisation d'une moyenne étant effectuée pour la minimisation d'artefacts selon l'équation suivante

$$\overline{I_{precisione\,xy}} = \frac{I_{sec\,tionné\,xy}\left(0, \frac{2\pi}{3}, \frac{4\pi}{3}\right) + I_{sec\,tionné\,xy}\left(\frac{4\pi}{3}, \frac{2\pi}{3}, 0\right)}{2}$$

Fig.1

Fig.2

Fig.3

Fig.4

EP 1 307 774 B1

19

Fig.5

Fig.6

Fig.7a

Fig.7b

EP 1 307 774 B1

Position 1    Position 2                    Scanner

Fig.8

2

1

Fig.9

Fig.10

EP 1 307 774 B1

Fig.11

Kamerasignal/Steuerung

Kamera

Scanner +
Z-Verstellung des Gitters

Gitterschiebe
Modul

Feinfokus
Tischaufsatz

90V - 230V/AC

Interface
oder RS232
COM 1

RS232
COM 2

90V - 230V/AC

Ansteuerung für
Feinfokus

ext. Z-
Trieb

CAN

Z-Verstellung Tisch

Usteuer

Kamera-Trigger / Out

Shutter / Out

Kamera
RDY/In

90V - 230V/AC

RS232

90V - 230V/AC

RS 232

CAN    RS232  Usteu-  Gitterer      schieber

analog  8x    8x
In      Out   In

Motorsteuerung

+5V
+/-15V
CAN   +24V

Control Unit

CAN

+5V
+24V

Wide Input

Netzteil

+5V
+/-15V
+24V

Gehäuse HF-dicht!

EP 1 307 774 B1

Fig.12

Fig.13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5493400 A, Gröbler
- DE 19930816
- US 5867604 A, Ben Levy
- US 08510632 B
- WO 9706509 A, Ben Levy
- WO 9845745 A

### In der Beschreibung aufgeführte Nicht-Patentliteratur

- **T. WILSON et al.** Method of obtaining optical sectioning by using structured light in a conventional microscope. *Optics Letters,* 1997, vol. 22 (24
- **T. WILSON et al.** Real-time three dimensional imaging of macroscopic structures. *Journal of Microscopy,* 1998, vol. 191 (2
- **M.A.A. NEIL et al.** Real Time 3D fluorescence microscopy by two beam interference illumination. *Optics Communications,* 1998, vol. 153
- Grating image Systems for Optical Sectioning Fluorescence Microscopy of Cells, Tissues, and Small Organisms. **F. LANNI et al.** Imaging Neurons-a laboratory manual. Cold Spring Harbor Laboratory Press, 2000
- **Q.S. HANLEY ; P. J. VERVEER ; T. M. JOVIN.** Optical Sectioning Fluorescence Spectroscopy in a Programmable Array Microscope. *Applied Spectroscopy,* 1998, vol. 52 (6), 783